# EUROPEAN PATENT SPECIFICATION

(11) **EP 1 961 324 B1**
(45) Date of publication and mention of the grant of the patent: **06.05.2020**
(21) Application number: 05806289.4
(22) Date of filing: 10.11.2005
(51) Int. Cl.: A44B 1/04, A41D 1/00, D04D 7/00, D03D 15/00

(54) **LUMINOUS CLOTHING ACCESSORY AND LUMINOUS CLOTHING FIBER AND LUMINOUS ACCESSORIZED CLOTHES USING THEM**
LEUCHTENDES BEKLEIDUNGSACCESSOIRE UND LEUCHTENDE BEKLEIDUNGSFASER UND DIESE VERWENDENDE LEUCHTENDE KLEIDUNG MIT ACCESSOIRES
ACCESSOIRE DE VETEMENT LUMINEUX, FIBRE DE VETEMENT LUMINEUX ET VETEMENTS A ACCESSOIRE LUMINEUX LES UTILISANT

(30) Priority: 18.10.2005 JP 2005302466
(43) Date of publication of application: 27.08.2008
(73) Proprietor: Ono, Taduko, Utunomiya-shi Tochigi 3200851 (JP)
(72) Inventor: Ono, Taduko, Utunomiya-shi Tochigi 3200851 (JP)
(74) Representative: Dehns
(86) International application number: PCT/JP2005/020643
(87) International publication number: WO 2007/046154

(56) References cited:
- DE-A1- 3 707 626
- GB-A- 1 328 419
- GB-A- 2 305 848
- JP-A- 2001 243 802
- JP-U- 3 061 778
- JP-U- 49 051 403
- JP-U- 56 162 730
- JP-Y1- 47 033 039
- US-A- 4 234 907
- US-A- 4 727 603

## Description

### Technical Field

The present invention relates to accessories for a dress attached to clothing, such as Western clothes, a *kimono* or an *obi* [that is a long, and narrow strip of cloth having around the waist on a *kimono*], or clothing fibers woven into said clothing.

### Background Technology

People have usually worn clothing, and it is essential for living. However, they wear the clothing not only for living but also for dressing up themselves as fashion these days. Then, in order to dress up themselves, they try to personalize themselves by wearing something different from other people. However, there must be many people who have felt awkward because of seeing other people wear the same clothing. In other words, it is almost impossible to try to purchase clothing no one else has, and it is the actual situation that absolute original means only clothing of hand-made goods.

Then, clothing, which can be worn inside out, generally referred to as 'reversible' is variously proposed. According to these proposals, if a design, such as a pattern, is differentiated between a right side and a reverse side, it becomes possible to mix-and-match two different versions with one wardrobe. However, only two versions are still monotonous, and after all, people end up wearing only the favorite design side, and if the clothing is the same reversible one as others', there is also a risk to wear the clothing with the same design in 50 % of the situations.

Further, clothing presenting various appearances by attaching detachable members to the clothing, such as detachment or combination of the members, is also proposed. For example, there is a wardrobe whose sleeves can be detached from the shoulders or the intermediate sections of the sleeves. According to this proposal, although it is true that this is convenient as a wardrobe used both in summer and winter, there is hardly a difference from the aspect of fashion, and the above-mentioned problems have not been solved yet. Further, there is also clothing that is designed to have a detachable decorative member, such as an emblem, and whose decorative members can be variously changed at the time of wearing. According to this proposal, a change of the decorative members brings some degrees of change; however, as similar to the above-mentioned clothing, there is hardly a difference in the aspect of fashion and the above-mentioned problems have not been solved yet [with this concept].
- Patent Literature 1:: Japanese Patent Application Laid-Open No. 2004-183202
- Patent Literature 2:: Japanese Patent Application Laid-Open No. 2002-247110
- Patent Literature 3:: Japanese Patent Application Laid-Open No. 2001-55610
- Patent Literature 4:: Japanese Patent Application Laid-Open No. 2000-234207
- Patent Literature 5:: Japanese Utility-Model Application Laid-Open No. HI-165879
- Patent Literature 6:: Japanese Utility-Model Application Laid-Open No. S63-123613
- Patent Literature 7:: Japanese Utility-Model Application Laid-Open No. S61-159309

### DISCLOSURE OF THE INVENTION

### Problem to be Solved by the Invention

Taking the problems into consideration, the objective of the present invention is to provide luminescent accessories, luminescent clothing fibers and luminescent clothing using these accessories and/or fibers that have originality enabling demonstration of free individual characteristics by each individual, and enable realization of discrimination from other clothing.

### Means for Solving the Problem

DE 3707626 A1 and GB 1328419 A disclose luminous clothing accessories attachable to clothing. GB 2305848A and US 4234907 A disclose a fabric in which some of the fibers are optical fibers illuminated by a light source.

Viewed from one aspect the present invention provides a luminescent accessory to be attached to clothing, such as Western clothes, a kimono or an obi, the luminescent accessory comprising: an attachment part; a power source; a luminous object connected to the power source; an ON/OFF switch by which a power supply from the power source can be turned on and off; a substrate; and a circuit; the substrate and circuit being located between the power source and the luminous object such that a power supply from the power source to the luminous object is changed by an instruction from the substrate and the circuit whereby to change a luminous pattern of the luminous object; characterised in that the power source, the luminous object, the substrate and the circuit are housed within the accessory, the accessory further comprises a cover, and the power source is accessible for exchange via an opening/closing mechanism.

In addition, in certain embodiments the present invention extends to luminescent clothing formed by attaching the luminescent accessories to any sections of the clothing.

Further, the present invention can adopt a mode where the luminescent clothing is a kimono or an obi.

In addition, the present invention can adopt a configuration where the luminous object is a light-emitting diode.

In addition, the present invention is equipped with a circuit, and can adopt a configuration where a luminous pattern of the luminous object is changed.

### Efficacy of the Invention

With the luminescent accessories relating to the present invention, it is possible to easily attach them by sewing, and the clothing where the accessories are attached enables creation that is rich in originality with an excellent aesthetic sense, like clothing where beads and/or spangles are stitched or that is trimmed with embroidery.

Further, according to the luminescent accessories and the luminescent clothing fibers relating to the present invention, the decorative effect referred to as luminescence provides an innovative aesthetic sense of clothing, and if a person wears clothing where the luminescent accessories are optionally attached, such as Western clothes, a *kimono* or an *obi,* or clothing where the luminescent accessories are used as buttons, or clothing where the luminescent clothing fibers are used, the differentiation from other clothing is accomplished and the clothing that excels in the decorative properties having sufficient originality can be provided.

In addition, a change in a luminous pattern of the luminous objects by establishing a circuit results in a change in the luminous pattern, such as a color emitted by the luminous objects, strength of luminosity or blinking, and a further excellent decorative effect is provided; concurrently, originality is demonstrated by each individual wearer and it enables subjective and objective differentiation.

### Best Mode for Carrying Out the Invention

Hereafter, embodiments of the luminescent accessories relating to the present invention will be described based upon drawings.

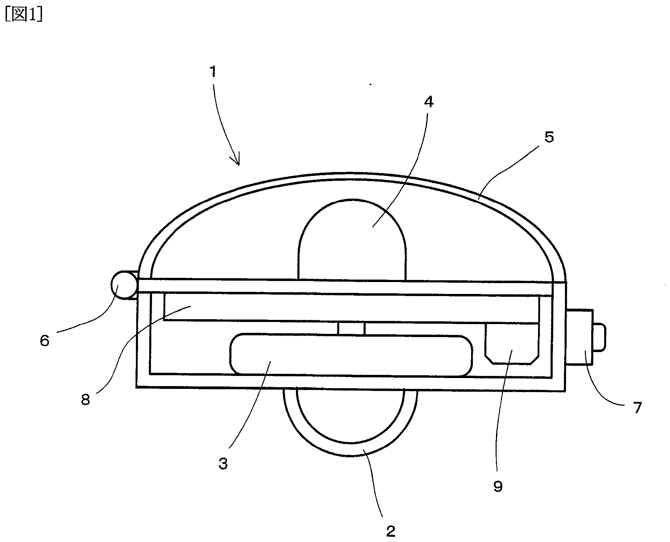

Fig. 1 is a cross sectional view showing luminescent accessories 1 relating to the present invention. The luminescent accessories 1 are composed of an attaching part 2, a power source 3, and a luminous object 4 connected to the power source 3.

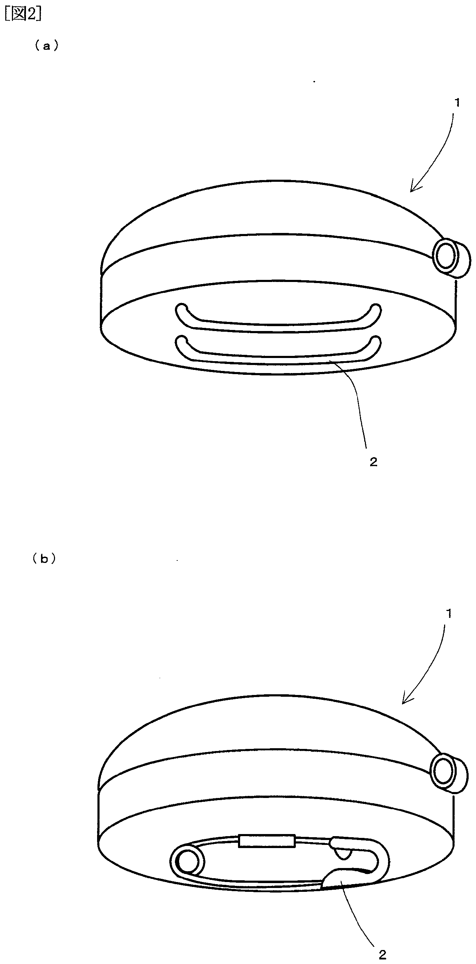

The attaching part 2 is for enabling easy attachment of the luminescent accessories 1 to clothing, and its structure is not particularly limited, but as shown in Fig. 1 or Fig. 2 (a), the attaching part 2 can be needle threading holes for attaching, or as shown in Fig. 2 (b), it can be a safety pin. Further, for the power source 3, it shall not be particularly limited as long as it demonstrates a function as a power source, but it is desirable that the luminescent accessories 1 relating to the present invention is small-sized from a functional point of view; therefore, it is desirable to adopt a small-sized one, such as a button cell. Then, in order to have the freely-replaceable power source 3, an opening/closing mechanism, such as a hinge 6 or screw as shown in the drawing, is established.

The luminous object 4 is connected to the power source 3 and shall emit a light by receiving a power source supply from the power source 3. The luminous object 4 is not particularly limited, and a light bulb or a light-emitting diode can be considered. If taking miniaturization or power consumption into consideration, the light-emitting diode is desirable. Further, a structure is provided where the power supply from the power source part can be arbitrarily turned ON/OFF by establishing a switch 7 as shown in the drawing. Furthermore, in the drawing, a cover 5 for covering the upper side of the luminous object 4 is attached; however, it is not always necessary to have said structure. The cover 5 functions as a protective cover in the case that the luminous object 4 is a light bulb or functions to change a luminescent color to be emitted by changing a color of the cover 5.

Further, as shown in the drawing, another mode to change a luminous pattern of the luminous object 4 by establishing a substrate 8 and a circuit 9 between the power source 3 and the luminous object 4 is provided. In other words, this is a mode where a power supply from the power source 3 to the luminous object 4 is changed by an instruction from the substrate 8 and the circuit 9, and the luminescent accessories 1 can blink or increase/decrease a light or the luminescent color can be changed when the luminous object 4 is composed of multiple light-emitting diodes with different colors.

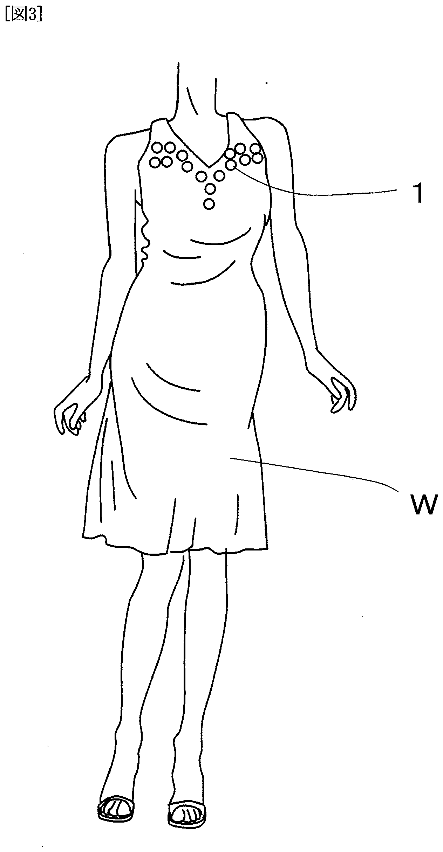

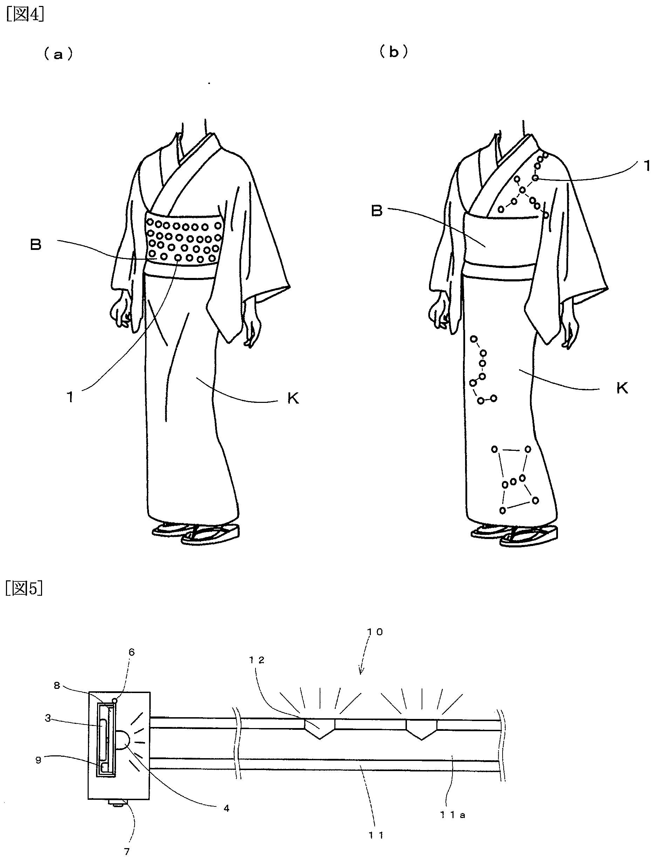

As a use mode of the luminescent accessories 1 relating to the present invention configured as described above, various use modes, such as a use as a button for clothing, can be considered. Fig. 3 and Fig. 4 show use modes where the luminescent accessories 1 are attached to arbitrary sections, and Fig. 3 shows a use mode of Western clothes, Fig. 4 (a) shows a use mode of an *obi* and Fig. 4 (b) shows a use mode of a *kimono.* There is no particular limitation in the attaching mode, such as sections to be attached or the number of accessories for a dress to be attached, and it is possible to attach them at random or by patterning a certain figure, such a star sign, as shown in Fig. 4 (b). Furthermore, it is needless to say, there is no particular limitation about clothing, which is a subject for having the accessories attached, and anything, such as scarf, gloves, shawl, veil, hat, turban or other ethnic costume, can be a subject other than the Western clothes and *kimonos* shown in the drawings.

As described above, the luminescent accessories 1 relating to the present invention enables free attachment and detachment to/from clothing, and if a wearer feels bored with the design by the attached luminescent accessories 1, it is also possible to easily change to another design.

A mode where attachment & detachment of the luminescent accessories 1 is disabled but luminescent accessories 1 providing a predetermined pattern to the clothing in advance are secured and luminescent clothing W is described for explanatory purposes.

Fig. 5 is a cross sectional view showing a luminescent clothing fiber 10 described for explanatory purposes. The luminescent clothing fiber 10 is formed with an optical fiber 11, and it is configured by establishing at least one or more light escaping parts 12 at predetermined sections of the optical fiber 11.

In the optical fiber 11, since a characteristic of a light to attempt to travel through a section with a high refractive index is utilized, a phenomenon referred to as total reflection where lights within a certain incident angle are all reflected into glass occurs. This is a phenomenon to occur due to a difference in refractive indexes. However, the establishment of the light escaping part 12 whose refractive index is partially high in the inside of the optical fiber 11a causes an escape of a portion of light from the inside of the optical fiber 11a.

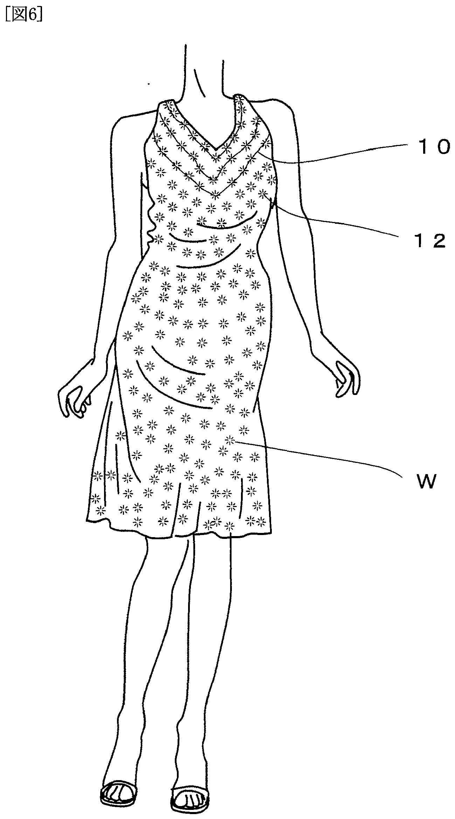

Fig. 6 shows a use mode in the case of using the related luminescent clothing fibers 10 as fibers of the luminescent clothing W. A plurality of the light escaping parts 12 are established in predetermined sections of [each] luminescent clothing fiber 10, and the luminescent clothing W is configured by weaving these as fibers for clothing or weaving them into fibers for clothing. At this time, the luminescent clothing W shall be equipped with at least one or more power sources 3 arranged at the predetermined sections; concurrently, equipped with at least one or more luminous objects 4 connected to the power sources 3. Then, lights from the luminous objects 4 transmit through the inside of the optical fiber 11a and are escaped from the light escaping parts 12.

Furthermore, for the power source 3, it is not particularly limited as long as the one demonstrates a function as a power source as similar to the luminescent accessories 1, and a small size is preferable from the viewpoint of function; therefore, it is desirable to adopt a small-sized power source 3, such as a button cell.

The luminous object 4 is connected to the power source 3 as similar to the luminescent accessories 1 and emits a light by receiving a power supply from the power source. The luminous object 4 is not particularly limited, and a light bulb or a light-emitting diode can be considered, and taking the miniaturization and power consumption into consideration, a light-emitting diode is preferable.

For a luminous pattern, as shown in the drawings, a mode changing the luminous pattern of the luminous object 4 by establishing the substrate 8 and the circuit 9 between the power source 3 and the luminous object 4 can be considered. In other words, this is a mode where the power supply attached from the power source 3 to the luminous object 4 is changed by instructions from the substrate 8 and the circuit 9, and the luminescent accessories 1 can blink, or increase & decrease a light or when the luminous objects 4 are multiple light-emitting diodes with different colors, it is possible to change a luminous color. Further, another mode where a color, blinking [pattern] and light decrease & increase are closely changed by establishing different luminous object 4, power source 3, substrate 8 and circuit 9 per fiber, and the decorative effect of the luminescent clothing W is also possible.

Other that those, it is similar to the luminescent accessories 1 that the power source 3 by an opening/closing mechanism, such as a hinge, is freely exchangeable and it is desirable to establish the ON/OFF mechanism of the power supply by a switch.

As described above, since it is unnecessary for the luminescent clothing W using the luminescent clothing fibers 10 to place a power source at each luminescent section, the exchange of the power source is easy and the luminescent clothing W becomes lightweight, it is no such thing that a person feels uncomfortable to wear.

### Industrial Applicability

As described above, since the luminescent accessories 1 and the luminescent clothing W created by attaching these relating to the present invention enable provision of glitter and vivid colors in an outfit requiring gorgeousness, such as *furisode* [that is a traditional formal kimono for unmarried women], ceremonial *kimono* or a party dress, [the luminescent accessories 1, the luminescent clothing fiber 10 and the luminescent clothing W] will contribute to the development of new category in the clothing industry; concurrently, will historically vault the conventional clothing industry. Further, in the costume field of stage art, for example, if an opera singer or ballet dancer performs with a costume created from the luminescent accessories 1 or the luminescent clothing fibers 10, new art creation can be realizable, for example, the person's expression can strongly and beautifully impress upon the audience. In addition, if [the luminescent accessories 1] is used for a school bag or clothing for a child, his/her presence at night can be confirmed, and a use mode where while the fashion characteristics is taken into consideration, it demonstrates an effect as an accident avoidance is also possible.

### BRIEF DESCRIPTION OF DRAWINGS

Fig. 1 is a cross sectional view showing a luminescent accessory relating to the present invention.
Fig. 2 is an explanatory diagram showing an embodiment of the attachment part of the luminescent accessories relating to the present invention.
Fig. 3 is an explanatory diagram showing a use mode of the luminescent accessories relating to the present invention.
Fig. 4 is an explanatory diagram showing a use mode of the luminescent accessories relating to the present invention.
Fig. 5 is a cross sectional view showing a luminescent clothing fiber described for explanatory purposes.
Fig. 6 is an explanatory diagram showing a use mode of the luminescent clothing fiber described for explanatory purposes.

### Description of Symbols

- 1: luminescent accessory
- 2: attachment part
- 3: power source
- 4: luminous object
- 5: cover
- 6: hinge
- 7: switch
- 8: substrate
- 9: circuit
- 10: luminescent clothing fiber
- 11: optical fiber
- 11a: inside of optical fiber
- 12: light escaping part
B luminescent clothing *obi*
K luminescent clothing *kimono*
W luminescent clothing

## Claims

1. A luminescent accessory (1) to be attached to clothing, such as Western clothes, a kimono or an obi, the luminescent accessory comprising:
an attachment part (2);
a power source (3);
a luminous object (4) connected to the power source (3);
a substrate (8) and a circuit (9); **characterized by** an ON/OFF switch (7) by which a power supply from the power source (3) can be turned on and off;
the substrate (8) and circuit (9) being located between the power source (3) and the luminous object (4) such that a power supply from the power source (3) to the luminous object (4) is changed by an instruction from the substrate (8) and the circuit (9) whereby to change a luminous pattern of the luminous object;
wherein the power source (3), the luminous object (4), the substrate (8) and the circuit (9) are housed within the accessory (1), the accessory (1) further comprises a cover (5), and the power source (3) is accessible for exchange via an opening/closing mechanism (6).

2. A luminescent accessory (1) as claimed in claim 1, wherein the opening/closing mechanism (6) is a hinge or a screw.

3. A luminescent accessory (1) as claimed in claim 1 or 2 , wherein the luminous object (4) is a light-emitting diode.

4. A luminescent accessory (1) as claimed in any preceding claim, wherein the luminescent accessory is a button for clothing.

5. A luminescent clothing having luminescent accessories (1) as claimed in any of claims 1 to 4 attached at arbitrary sections.

6. A luminescent clothing as claimed in claim 5, wherein the luminescent clothing is a kimono.

7. A luminescent clothing as claimed in claim 5, wherein the luminescent clothing is an obi.

## Patentansprüche

1. Leuchtendes Zubehör (1) zum Befestigen an Kleidungsstücken, wie westlicher Kleidung, einem Kimono oder einem Obi, wobei das leuchtende Zubehör Folgendes umfasst:
einen Befestigungsteil (2);
eine Stromquelle (3);
einen leuchtenden Gegenstand (4), der mit der Stromquelle (3) verbunden ist;
ein Substrat (8) und eine Schaltung (9); **gekennzeichnet**
**durch** einen EIN/AUS-Schalter (7), durch den eine Stromzufuhr von der Stromquelle (3) ein- und ausgeschaltet werden kann;
**dadurch**, dass das Substrat (8) und die Schaltung (9) zwischen der Stromquelle (3) und dem leuchtenden Gegenstand (4) angeordnet sind, so dass eine Stromzufuhr von der Stromquelle (3) zu dem leuchtenden Gegenstand (4) durch eine Anweisung von dem Substrat (8) und der Schaltung (9), das Leuchtmuster des leuchtenden Gegenstands zu verändern, verändert wird;
wobei die Stromquelle (3), der leuchtende Gegenstand (4), das Substrat (8) und die Schaltung (9) in dem Zubehör (1) untergebracht sind, wobei das Zubehör weiter eine Abdeckung (5) umfasst und die Stromquelle (3) zum Ersetzen über einen Öffnungs-/Schließmechanismus (6) zugänglich ist.

2. Leuchtendes Zubehör (1) nach Anspruch 1, wobei der Öffnungs-/Schließmechanismus (6) ein Scharnier oder eine Schraube ist.

3. Leuchtendes Zubehör (1) nach Anspruch 1 oder 2, wobei der leuchtende Gegenstand (4) eine Leuchtdiode ist.

4. Leuchtendes Zubehör (1) nach einem der vorhergehenden Ansprüche, wobei das leuchtende Zubehör ein Knopf für Kleidungsstücke ist.

5. Leuchtendes Kleidungsstück, das leuchtendes Zubehör (1) nach einem der Ansprüche 1 bis 4 an beliebigen Bereichen befestigt aufweist.

6. Leuchtendes Kleidungsstück nach Anspruch 5, wobei das leuchtende Kleidungsstück ein Kimono ist.

7. Leuchtendes Kleidungsstück nach Anspruch 5, wobei das leuchtende Kleidungsstück ein Obi ist.

## Revendications

1. Accessoire luminescent (1) à fixer à un vêtement, tel que des vêtements occidentaux, un kimono ou un obi, l'accessoire luminescent comprenant :
une partie de fixation (2) ;
une source d'alimentation (3) ;
un objet lumineux (4) connecté à la source d'alimentation (3) ;
un substrat (8) et un circuit (9) ; **caractérisé par**
un commutateur MARCHE/ARRÊT (7) par l'intermédiaire duquel une alimentation électrique depuis la source d'alimentation (3) peut être activée et désactivée ;
le substrat (8) et le circuit (9) étant situés entre la source d'alimentation (3) et l'objet lumineux (4) de telle sorte qu'une alimentation électrique entre la source d'alimentation (3) et l'objet lumineux (4) est modifiée par une instruction provenant du substrat (8) et du circuit (9), ce qui permet de modifier un motif lumineux de l'objet lumineux ;
dans lequel
la source d'alimentation (3), l'objet lumineux (4), le substrat (8) et le circuit (9) sont logés à l'intérieur de l'accessoire (1), l'accessoire (1) comprenant en outre un couvercle (5), et la source d'alimentation (3) est accessible pour un remplacement par l'intermédiaire d'un mécanisme d'ouverture/fermeture (6).

2. Accessoire luminescent (1) selon la revendication 1, dans lequel le mécanisme d'ouverture/fermeture (6) est une charnière ou une vis.

3. Accessoire luminescent (1) selon la revendication 1 ou 2, dans lequel l'objet lumineux (4) est une diode électroluminescente.

4. Accessoire luminescent (1) selon l'une quelconque des revendications précédentes, dans lequel l'accessoire luminescent est un bouton pour un vêtement.

5. Vêtement luminescent ayant des accessoires luminescents (1) selon l'une quelconque des revendications 1 à 4 fixés au niveau de section arbitraires.

6. Vêtement luminescent selon la revendication 5, dans lequel le vêtement luminescent est un kimono.

7. Vêtement luminescent selon la revendication 5, dans lequel le vêtement luminescent est un obi.
